# EUROPÄISCHE PATENTANMELDUNG

(11) **EP 2 106 896 A1**
(43) Veröffentlichungstag der Anmeldung: **07.10.2009**
(21) Anmeldenummer: 09003161.8
(22) Anmeldetag: 05.03.2009
(51) Int. Cl.: B29C 45/76, G05B 19/418

(54) **Maschinenanordnung mit einer Mehrzahl von Produktionsmaschinen, insbesondere von Kunstoff-Spritzgiessmaschinen**

(30) Priorität: 02.04.2008 DE 102008016869
(71) Anmelder: Sumitomo (SHI) Demag Plastics Machinery GmbH, 90571 Schwaig (DE)
(72) Erfinder: Mehler, Christoph, 88085 Langenargen (DE)
(74) Vertreter: Hübner, Gerd

(57) **Zusammenfassung**

Bei einer Maschinenanordnung mit einer Mehrzahl von Produktionsmaschinen, insbesondere von Kunststoff-Spritzgießmaschinen, ist eine der Produktionsmaschinen (1.1 - 1.5) als vorrangige Führungsmaschine (1.1) ausgelegt, die mit den verbleibenden nachrangigen Produktionsmaschinen (1,2 - 1.5) über ein Datennetzwerk (3) zum Austausch von Steuerungsdaten verbunden ist. Die Führungsmaschine (1.1) ist ferner mit einer zentralen Steuerungseinrichtung (4) zur Ansteuerung zumindest der Einschaltvorgänge der nachrangigen Produktionsmaschinen (1.2 - 1.5) über das Datennetzwerk (3) ausgerüstet ist.

## Beschreibung

Die Erfindung betrifft eine Maschinenanordnung mit einer Mehrzahl von Produktionsmaschinen, insbesondere von Kunststoff-Spritzgießmaschinen.

Zum Hintergrund der Erfindung ist festzuhalten, dass ein zentraler Punkt der Infrastruktur von Fabrikationsstätten die Energieversorgung der dort arbeitenden Produktionsmaschinen ist. Um einen störungsfreien Betrieb der Produktionsmaschinen in einer solchen Fabrikationsstätte zu gewährleisten, muss die Energieversorgung auf den maximalen Leistungsbedarf der Produktionsmaschinen ausgelegt sein.

In diesem Zusammenhang beschäftigen sich Maschinenhersteller mit der Minimierung des Energieverbrauches bzw. des Leistungsbedarfs ihrer Maschinen. In der Spritzgießtechnik beispielsweise werden elektronisch gesteuerte Regelpumpen (DFEE-Pumpen) eingesetzt, die besonders energieeffizient sind. Auch kommen so genannte "intelligente Ventilsteuerungen" bei modernen Spritzgießmaschinen zum Einsatz.

Die vorstehenden Maßnahmen zielen auf die Verringerung des Energieverbrauches der einzelnen Maschinen ab. Es wird für eine jeweilige Maschine eine Energiebilanz erstellt, die als Basis für die Energieverbrauchsbestimmung bzw. Leistungsbedarfsermittlung von Fabrikationsstätten dienen.

Um die eingangs erwähnte Betriebssicherheit der Produktionsmaschinen in einer Fabrikationsstätte zu gewährleisten, wird deren Energiebedarf anhand der von jeder Maschine benötigten Leistungsspitzen bestimmt. Diese sind beispielsweise im Falle von Spritzgießmaschinen gerade beim Anfahren und Aufheizen der Maschine besonders ausgeprägt. Die zur Verfügung gestellte Leistung bei einer Fabrikationsstätte orientiert sich somit an der Summe der von jeder Maschine benötigten Maximalleistung, wie sie nur bei besonderen Maschinenzuständen abgefordert wird. Für den Durchschnittsbetrieb einer Fabrikationsstätte ist die maximale Versorgungsleistung somit an sich überdimensioniert.

Ausgehend von dieser geschilderten Problematik des Standes der Technik liegt der Erfindung die Aufgabe zugrunde, eine Maschinenanordnung mit einer Mehrzahl von Produktionsmaschinen und insbesondere von Kunststoff-Spritzgießmaschinen anzugeben, die ohne Abstriche an die Betriebssicherheit der Produktionsmaschinen mit einer geringeren maximalen Versorgungsleistung auskommt.

Diese Aufgabe wird durch die im Kennzeichnungsteil des Anspruches 1 angegebene hierarchische Architektur der Maschinenanordnung gelöst. Demnach ist vorgesehen, dass
- eine der Produktionsmaschinen als vorrangige Führungsmaschine ausgelegt ist,
- die Führungsmaschine mit den verbleibenden nachrangigen Produktionsmaschinen über ein Datennetzwerk zum Austausch von Steuerungsdaten verbunden ist, und
- die Führungsmaschine ferner mit einer zentralen Steuerungseinrichtung zur Ansteuerung zumindest der Einschaltvorgänge der nachrangigen Produktionsmaschinen über das Datennetzwerk ausgerüstet ist.

Aufgrund dieser Architektur ist es möglich, dass die Führungsmaschine aller Produktionsmaschinen der Maschinenanordnung, also sich selbst und die nachrangigen Produktionsmaschinen definiert ansteuert, so dass Betriebszustände, in denen die jeweilige Maschine einen maximalen Leistungsbedarf zeigt, nicht gleichzeitig bei allen Produktionsmaschinen auftreten, sondern beispielsweise zeitlich aufeinander folgend vonstatten gehen. Damit ist der maximale Leistungsbedarf der gesamten Maschinenanordnung gegenüber dem eingangs geschilderten Stand der Technik deutlich verringert, entsprechend geringer dimensioniert und damit kostengünstiger kann die Infrastruktur für die Energieversorgung der Fabrikationsstätte ausgelegt sein.

Gemäß einer bevorzugten Ausführungsform ist vorgesehen, dass die zentrale Steuerungseinrichtung der Führungsmaschine mittels eines darin implementierten Energiemanagementprogrammes die Ansteuerung der Einschaltvorgänge der Produktionsmaschinen vornimmt. Die zentrale Steuerungseinrichtung stellt also einen Controller für das gesamte Energiemanagement einer kompletten "Farm" von Produktionsmaschinen dar, wodurch beispielsweise die Einschaltvorgänge aller Maschinen optimiert werden können.

Dies kann besonders effektiv dadurch unterstützt werden, dass - wie eine weitere bevorzugte Ausführungsform der Erfindung vorsieht - die Produktionsmaschinen jeweils mit einem Leistungsmessgerät zur Ermittlung der insbesondere bei einem Einschaltvorgang benötigten Leistungsdaten der Produktionsmaschine versehen ist. Diese Leistungsdaten werden über das Datennetzwerk an die Steuereinrichtung der Führungsmaschine übermittelt und dienen dort als Eingangsdaten für das Energiemanagementprogramm. Bevorzugtermaßen ist das Datennetzwerk in an sich bekannter Weise als Bussystem oder Ethemet-Datennetzwerk ausgelegt.

Besonders vorteilhaft lässt sich dieses Energienetzmanagement beim Anfahren und/oder Aufheizen von Kunststoff-Spritzgießmaschinen einsetzen.

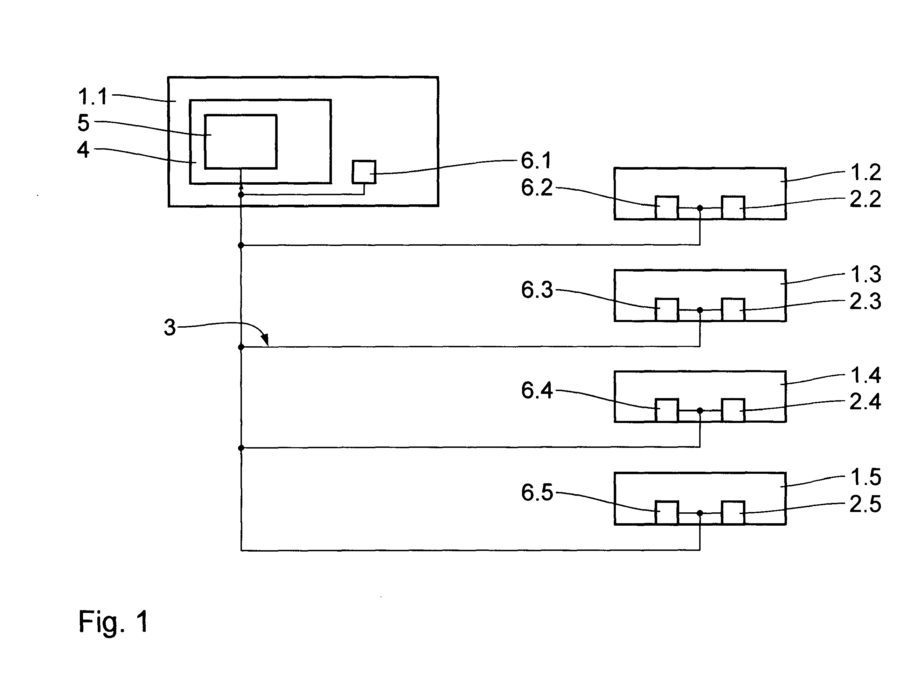

Weitere Merkmale, Einzelheiten und Vorteile der Erfindung ergeben sich aus der nachfolgenden Beschreibung, in der ein Ausführungsbeispiel des Erfindungsgegenstandes anhand der beigefügten Zeichnung näher erläutert wird. Diese
- Fig. 1: zeigt ein schematisches Schaubild einer Maschinenanord- nung.

Wie aus dem Diagramm deutlich wird, sind in einer Fabrikationsstätte fünf Kunststoff-Spritzgießmaschinen 1.1 bis 1.5 aufgestellt, von denen eine als Führungsmaschine 1.1 fungiert. Die nachrangigen Spritzgießmaschinen 1.2 bis 1.5 sind mit ihren jeweiligen Steuerungen 2.2 bis 2.5 über ein Datennetzwerk in Form eines Bussystems 3 mit der zentralen Steuerungseinrichtung 4 zum Austausch von Daten jedweder Art verbunden. Die Steuerungseinrichtung 4 ist in üblicher Weise durch einen Mikrocontroller oder einen Industrie-PC gebildet, wobei die Steuerungsabläufe durch entsprechende Steuerungsprogramme vonstatten gehen. Die üblichen Ein- und Ausgabegeräte, wie Tastaturen und Monitore, sind in dem beigefügten Diagramm der Übersichtlichkeit halber genau so weggelassen, wie die gesamte weitere Maschineninfrastruktur. In der programmgestützten Steuerungseinrichtung 4 ist ein Energiemanagementprogramm 5 implementiert, dem über das Bussystem 3 jeweils Leistungsdaten von den Spritzgießmaschinen 1.1 bis 1.5 zugeführt werden, die jeweils von darin vorgesehenen Leistungsmessgeräten 6.1 bis 6.5 ermittelt werden.

Sollen nun die Spritzgießmaschinen 1.1 bis 1.5 in einer Fabrikationsstätte in Betrieb gesetzt werden, so erfolgt dies unter zentraler Steuerung seitens der Führungsmaschine 1.1. Diese aktiviert beispielsweise mithilfe ihres Steuerungsprogramms zuerst die Spritzgießmaschine 1.2 und versetzt diese in ihren Anfahr- und Aufheizzustand, der einen hohen Leistungsbedarf hat. Die verbleibenden Spritzgießmaschinen 1.3 bis 1.5 und die Führungsmaschine 1.1 selbst werden dabei noch nicht angefahren, so dass der Gesamtleistungsbedarf der Fabrikationsstätte auf einem niedrigen Niveau bleibt. Sobald über das Leistungsmessgerät 6.2 der Spritzgießmaschine 1.2 festgestellt wird, dass der Leistungsbedarf aufgrund beispielsweise der Beendigung des Aufheizvorgangs der Maschine abgesunken ist, wird dies über das Energiemanagementprogramm verifiziert und die Steuerungseinrichtung 4 der Führungsmaschine 1.1 kann anschließend die nächste Spritzgießmaschine 1.3 aktivieren. Der Anfahr- und Aufheizvorgang wiederholt sich dann kaskadenartig bei jeder Spritzgießmaschine 1.3 bis 1.5 und bei der Führungsmaschine 1.1 selbst, bis alle Maschinen 1.1 bis 1.5 aufgeheizt und damit betriebsbereit sind. Erkennbar ist dieser gesamte Vorgang auf einem erheblich niedrigeren Maximalleistungsniveau vonstatten gegangen im Vergleich zu einer Inbetriebsetzung, bei der alle Maschinen 1.1 bis 1.5 gleichzeitig in den Anfahr- und Aufheizzustand gebracht werden.

## Patentansprüche

1. Maschinenanordnung mit einer Mehrzahl von Produktionsmaschinen, insbesondere von Kunststoff-Spritzgießmaschinen, **dadurch gekennzeichnet, dass**
- eine der Produktionsmaschinen (1.1 - 1.5) als vorrangige Führungsmaschine (1.1) ausgelegt ist,
- die Führungsmaschine (1.1) mit den verbleibenden nachrangigen Produktionsmaschinen (1,2 - 1.5) über ein Datennetzwerk (3) zum Austausch von Steuerungsdaten verbunden ist, und
- die Führungsmaschine (1.1) ferner mit einer zentralen Steuerungseinrichtung (4) zur Ansteuerung zumindest der Einschaltvorgänge der nachrangigen Produktionsmaschinen (1.2 - 1.5) über das Datennetzwerk (3) ausgerüstet ist.

2. Maschinenanordnung nach Anspruch 1, **dadurch gekennzeichnet, dass** die zentrale Steuerungseinrichtung (4) der Führungsmaschine (1.1) mittels eines in der Steuerungseinrichtung (4) implementierten Energiemanagementprogramms (5) die Ansteuerung der Einschaltvorgänge der Produktionsmaschinen (1.1 - 1.5) vornimmt.

3. Maschinenanordnung nach Anspruch 1 oder2, **dadurch gekennzeichnet, dass** die Produktionsmaschinen (1.1 - 1.5) jeweils mit einem Leistungsmessgerät (6.1 - 6.5) zur Ermittlung der insbesondere bei einem Einschaltvorgang benötigten Leistungsdaten der Produktionsmaschine (1.1 - 1.5) versehen ist, wobei die Leistungsdaten über das Datennetzwerk (3) an die Steuereinrichtung (4) der Führungsmaschine (1.1) als Eingangsdaten für das Energiemanagementprogramm (5) übermittelbar sind.

4. Maschinenanordnung nach einem der vorgenannten Ansprüche, **dadurch gekennzeichnet, dass** das Datennetzwerk als Bussystem (3) oder Ethemet-Datennetzwerk ausgelegt ist.

5. Maschinenanordnung nach einem der vorgenannten Ansprüche, **dadurch gekennzeichnet, dass** als Einschaltvorgänge das Anfahren und/oder Aufheizen von Kunststoff-Spritzgießmaschinen (1.1 - 1.5) von der Steuerungseinheit (4) steuerbar sind.
